# EUROPEAN PATENT SPECIFICATION

(11) **EP 4 309 485 B1**
(45) Date of publication and mention of the grant of the patent: **11.06.2025**
(21) Application number: 22185759.2
(22) Date of filing: 19.07.2022
(51) Int. Cl.: A01D 41/12, B60D 1/00, B60D 1/06, B60D 1/58, B60R 3/00, B60R 3/02

(54) **INTEGRATED STEP-UP WITHIN COMBINE HITCH**
INTEGRIERTE TRITTSTUFE IN EINER MÄHDRESCHERKUPPLUNG
ÉLÉVATEUR INTÉGRÉ À L'INTÉRIEUR D'UN ATTELAGE DE MOISSONNEUSE-BATTEUSE

(43) Date of publication of application: 24.01.2024
(73) Proprietor: CNH Industrial Belgium N.V., 8210 Zedelgem (BE)
(72) Inventor: Longueville, Stefan, 9990 Maldegem (BE)
(74) Representative: CNH Industrial IP Department

(56) References cited:
- US-A1- 2008 042 394
- US-B1- 7 661 693
- US-B2- 10 421 405
- US-B2- 8 844 962

## Description

### BACKGROUND OF THE INVENTION

### Field of the Invention

The present invention relates to agricultural machines such as agricultural combine harvesters, and, more particularly, to access steps used with such machines.

### Description of the Related Art

An agricultural harvester known as a "combine" is historically termed such because it combines multiple harvesting functions with a single harvesting unit, such as picking, threshing, separating, and cleaning. A combine includes a header, which removes the crop from a field, and a feeder housing which transports the crop matter into a threshing rotor. The threshing rotor rotates within a perforated housing, which may be in the form of adjustable concaves, and performs a threshing operation on the crop to remove the grain. Once the grain is threshed, it falls through perforations in the concaves onto a grain pan. From the grain pan, the grain is cleaned using a cleaning system and then transported to a grain tank onboard the combine. The cleaning system includes a cleaning fan, which blows air through oscillating sieves to discharge chaff and other debris toward the rear of the combine. Non-grain crop material such as straw from the threshing section proceeds through a straw chopper and out the rear of the combine. When the grain tank becomes full, the combine is positioned adjacent a vehicle into which the grain is to be unloaded, such as a semitrailer, gravity box, straight truck, or the like, and an unloading system on the combine is actuated to transfer the grain into the vehicle.

Agricultural equipment, including combines, must work in all conditions and climates. As such, the equipment is frequently tall for ground clearance. The equipment also has many moving parts, including the aforementioned sieves, which have service needs. Operators and service people may have difficulty accessing these service points because the tall ground clearance makes it hard to get to the service points. To enable easier access to such raised service points, access steps may be provided at appropriate locations on the equipment. What is needed in the art is a way to improve access to components that need to be serviced or adjusted without sacrificing ground clearance or function.

Prior access step assemblies have been complex, bulky, and relatively expensive to produce. U.S. 9,308,868 discloses a hitch assembly for an agricultural machine. A support member for the hitch assembly is mounted to the machine and is movable between storage and operating positions. Attached to the support member are a hitch and a rotating step assembly having at least one step. The step assembly is movable relative to the support member between storage and operating positions. When the support member is in the support member storage position and the step assembly is in the storage position, the hitch assembly is in a storage position. When the support member is in the support member operating position and the step assembly is in the operating position, the hitch assembly is in an operating position.

Further prior art hitch step assemblies are for example disclosed in US 8 844 962 B2, US 7 661 693 B1 or US 10 421 405 B2.

### SUMMARY OF THE INVENTION

The present invention provides an integrated hitch and step assembly for an agricultural vehicle that can be used to improve access to service or adjustment points without sacrificing ground clearance or function, using fewer parts, requiring less space beneath the vehicle to operate, and requiring less tooling to produce. The hitch and step assembly is advantageously mounted to the rear of a combine for accessing the sieves and other proximal service areas. The step storage position is advantageously chosen so that the step takes up a minimum amount of space and clears functional components of the combine. The hitch storage position is advantageously chosen so the hitch is positioned above ground clearance to avoid collision with the ground.

By integrating the step with the hitch, less mounting space and fewer parts are required to attach both the hitch and the step to the vehicle. The assembly has one movable component for the transition from a storage position to an operating position and from an operating position to a storage position. The integral hitch and step assembly also uses the fact that the hitch mounting point is a strong attachment point and an advantageous place to mount a step. Yet another advantage is that, as chaff and residue are exhausted from the rear of the combine, the step is stored in a location to minimize the accumulation of debris. Surprisingly, the inventors have found that these and other objectives can be achieved by providing an integrated hitch and step assembly according to the appended claims.

In an exemplary aspect, there is provided an integrated hitch and step assembly for being coupled with a base member of an agricultural machine. The assembly includes a support member configured for being coupled with the base member in a fixed position relative to the base member, a hitch assembly configured for being coupled with the support member and for moving relative to the support member between a hitch storage position and a hitch operating position, and at least one step coupled with the hitch assembly, the step being in a step storage position when the hitch assembly is in the hitch operating position, and the step being in a step operating position when the hitch assembly is in the hitch storage position. The hitch assembly is coupled pivotally with the support member, wherein the hitch assembly moves between the hitch storage position and the hitch operating position when the hitch assembly is rotated relative to the support member, the hitch assembly being configured for pivoting about an axis between the hitch storage position and the hitch operating position.

In some exemplary aspects, the hitch and step assembly includes a hitch coupled with a hitch swivel plate in a fixed position relative to the hitch swivel plate.

In some exemplary aspects, the step is coupled with the hitch swivel plate in a fixed position relative to the hitch swivel plate. In some exemplary aspects, the hitch is coupled with the hitch swivel plate on a side of the hitch swivel plate that faces outward when the hitch assembly is in the hitch operating position. In some exemplary aspects, the step is coupled with the hitch swivel plate on a side of the hitch swivel plate that faces inward when the hitch assembly is in the hitch operating position.

In some exemplary aspects, the axis is angled such that the hitch is raised vertically relative to the ground when the hitch assembly is moved from the hitch operating position to the hitch storage position and such that the step leveled for access in the step operating position. In some exemplary aspects, the axis is at an angle of about ten degrees from vertical relative to the ground. In some exemplary aspects, the step is horizontal in the step operating position.

In another exemplary aspect, an agricultural machine is provided, including a base member and the integrated hitch and step assembly according to any one of the appended claims for being coupled to the base member. In some exemplary aspects, the agricultural machine is an agricultural combine harvester, a forage harvester, or a cotton harvester. In some exemplary aspects, the base member of the agricultural machine comprises the support member for the hitch assembly.

### BRIEF DESCRIPTION OF THE DRAWINGS

The above-mentioned and other features and advantages of this invention, and the manner of attaining them, will become more apparent, and the invention will be better understood, by reference to the following description of embodiments of the invention taken in conjunction with the accompanying drawings, wherein:
FIG. 1 is a side view schematically showing an agricultural machine;
FIG. 2 is an exploded view of an integrated hitch and step assembly according to the present invention;
FIG. 3 is a perspective view of the integrated hitch and step assembly of FIG. 2, shown locked in a hitch operating position;
FIG. 4 is a perspective view of the integrated hitch and step assembly of FIG. 2, shown unlocked between a hitch operating position and a step operating position;
FIG. 5 a perspective view of the integrated hitch and step assembly of FIG. 2, shown unlocked in a step operating position;
FIG. 6 is a perspective view of the integrated hitch and step assembly of FIG. 2, shown locked in a step operating position;
FIG. 7 is a side elevation view of an agricultural machine including the integrated hitch and step assembly according to the present invention, wherein the integrated hitch and step assembly is shown in a hitch operating position;
FIG. 8 is a side elevation view of the agricultural machine of FIG. 7, wherein the integrated hitch and step assembly is shown in a step operating position;
FIG. 9 is a perspective view of the agricultural machine of FIG. 8, wherein the integrated hitch and step assembly is shown in a step operating position; and
FIG. 10 is a top view of the agricultural machine of FIG. 8, wherein the integrated hitch and step assembly is shown in a step operating position.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "grain", "straw" and "tailings" are used in this specification principally for convenience, but it is to be understood that these terms are not intended to be limiting. Thus, "grain" refers to that part of the crop material that is threshed and separated from the discardable part of the crop material, which is referred to as non-grain crop material, MOG, or straw. Incompletely threshed crop material is referred to as "tailings". The terms "forward", "rearward", "left" and "right", when used in connection with movable agricultural equipment such as an agricultural harvester and/or components thereof, are usually determined with reference to the direction of forward operative travel of the harvester; but, again, they should not be construed as limiting. The terms "longitudinal" and "transverse" are determined with reference to the fore-and-aft direction of the agricultural harvester and are equally not to be construed as limiting.

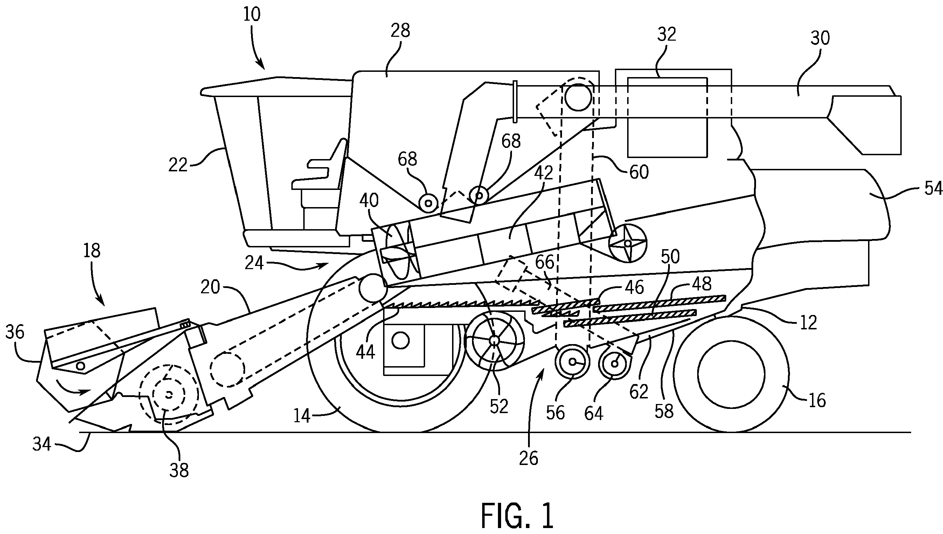

Referring now to the drawings, and more particularly to FIG. 1, there is shown an agricultural harvester in the form of a combine 10, which generally includes a chassis 12, ground engaging wheels 14 and 16, header 18, feeder housing 20, operator cab 22, threshing and separating system 24, cleaning system 26, grain tank 28, and unloading auger 30.

Front wheels 14 are larger flotation type wheels, and rear wheels 16 are smaller steerable wheels. Motive force is selectively applied to front wheels 14 through a power plant in the form of a diesel engine 32 and a transmission (not shown). Although combine 10 is shown as including wheels, it is also to be understood that combine 10 may include tracks, such as full tracks or half tracks.

Header 18 is mounted to the front of combine 10 and includes a cutter bar 34 for severing crops from a field during forward motion of combine 10. A rotatable reel 36 feeds the crop into header 18, and a double auger 38 (or a draper belt (not shown)) feeds the severed crop laterally inwardly from each side toward feeder housing 20. Feeder housing 20 conveys the cut crop to threshing and separating system 24 and is selectively vertically movable using appropriate actuators, such as hydraulic cylinders (not shown).

Threshing and separating system 24 is of the axial-flow type and generally includes a rotor 40 at least partially enclosed by and rotatable within a corresponding perforated concave 42. The cut crops are threshed and separated by the rotation of rotor 40 within concave 42, and larger elements, such as stalks, leaves and the like are discharged from the rear of combine 10. Smaller elements of crop material including grain and non-grain crop material, including particles lighter than grain, such as chaff, dust and straw, are discharged through perforations of concave 42.

Grain that has been separated by the threshing and separating assembly 24 falls onto a grain pan 44 and is conveyed toward cleaning system 26. Cleaning system 26 may include an optional pre-cleaning sieve 46, an upper sieve 48 (also known as a chaffer sieve), a lower sieve 50 (also known as a cleaning sieve), and a cleaning fan 52. Grain on sieves 46, 48 and 50 is subjected to a cleaning action by fan 52 which provides an air flow through the sieves to remove chaff and other impurities such as dust from the grain by making this material airborne for discharge from straw hood 54 of combine 10. Grain pan 44 and pre-cleaning sieve 46 oscillate in a fore-to-aft manner to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and toward the front of lower sieve 50. Clean grain auger 56 receives clean grain from each sieve 48, 50 of cleaning system 26. Clean grain auger 56 conveys the clean grain laterally to a generally vertically arranged grain elevator 60 for transport to grain tank 28. Tailings from cleaning system 26 fall to a tailings auger trough 62 via bottom pan 58. The tailings are transported via tailings auger 64 and return auger 66 to the upstream end of cleaning system 26 for repeated cleaning action. A pair of grain tank augers 68 at the bottom of grain tank 28 conveys the clean grain laterally within grain tank 28 to unloading auger 30 for discharge from combine 10.

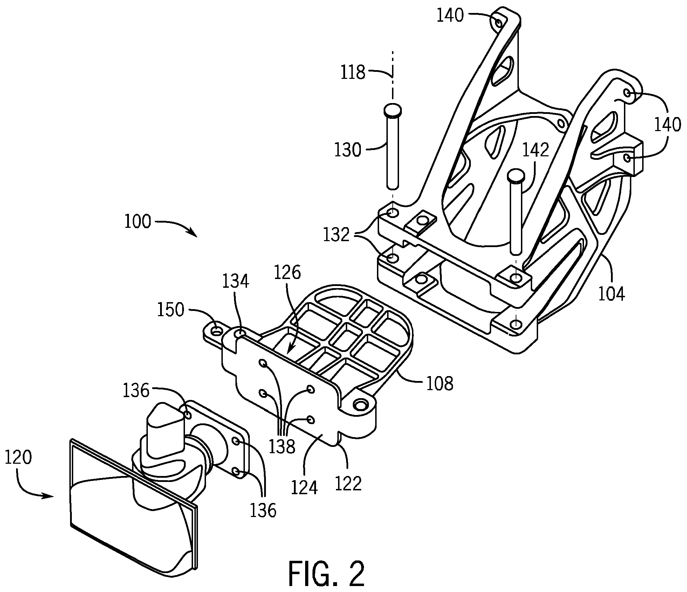

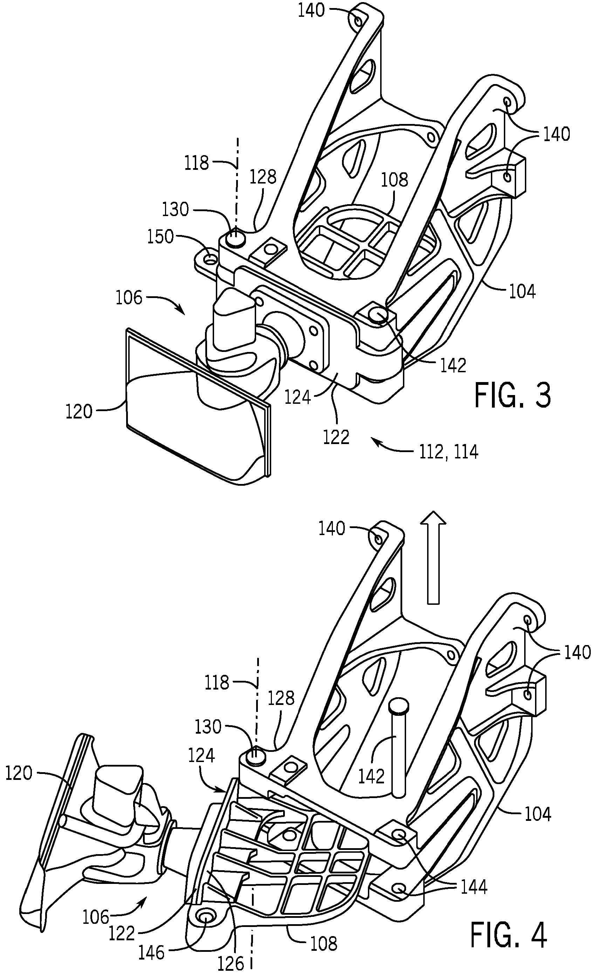

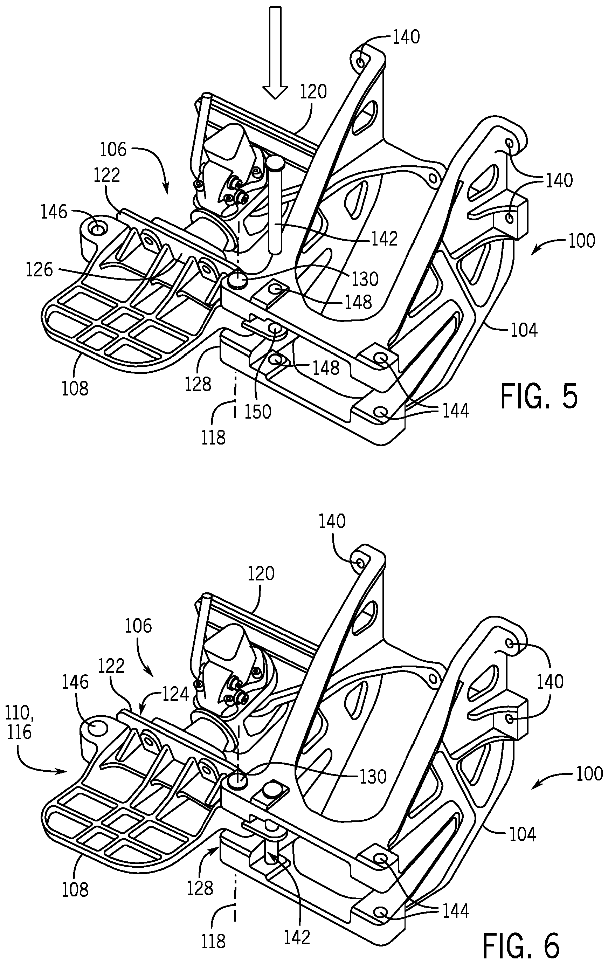

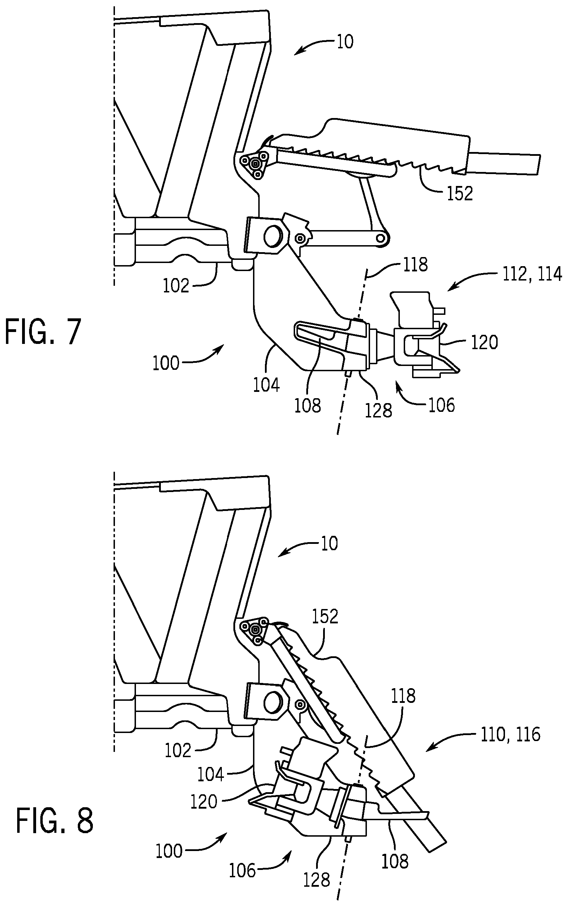

According to an aspect of the present invention, and referring now to FIGS. 2-7, there is shown an integrated hitch and step assembly 100 for being coupled with a base member 102 (see FIG. 7) of an agricultural machine 10. Assembly 100 includes a support member 104 configured for being coupled with the base member 102 in a fixed position relative to the base member 102. A hitch assembly 106 is configured for being coupled with the support member 104 and for moving relative to the support member 104 between a hitch storage position 110 and a hitch operating position 112. At least one step 108 is coupled with the hitch assembly 106, the step 108 being in a step storage position 114 when the hitch assembly 106 is in the hitch operating position 112 (see FIG. 3), and the step 108 being in a step operating position 116 when the hitch assembly 106 is in the hitch storage position 110 (see FIG. 6). The hitch assembly 106 is coupled pivotally with the support member 104, wherein the hitch assembly 106 moves between the hitch storage position 110 and the hitch operating position 112 when the hitch assembly 106 is rotated relative to the support member 104, the hitch assembly 106 being configured for pivoting about an axis 118 between the hitch storage position 110 and the hitch operating position 112 (see FIGS. 3-6).

As shown in FIGS. 2-6, the hitch assembly 106 includes a hitch 120 coupled with a hitch swivel plate 122 in a fixed position relative to the hitch swivel plate 122. The step 108 is coupled with the hitch swivel plate 122 in a fixed position relative to the hitch swivel plate 122. The hitch 120 is coupled with the hitch swivel plate 122 on a face 124 of the hitch swivel plate 122 that faces rearward (more generally, outward, away from the support member 104 and/or agricultural machine 10) when the hitch assembly 106 is in the hitch operating position 112, and the step 108 is coupled with the hitch swivel plate 122 on a face 126 of the hitch swivel plate 122 that faces forward (more generally, inward, toward the support member 104 and/or agricultural machine 10) when the hitch assembly 106 is in the hitch operating position 112.

As shown in FIGS. 7-8, the axis 118 about which hitch assembly 106 pivots at pivot joint 128 relative to support member 104 is angled such that the hitch 120 is raised vertically relative to the ground when the hitch assembly 106 is moved from the hitch operating position 112 to the hitch storage position 110 and such that the step 108 is leveled for access in the step operating position 116. Preferably, the axis 118 is at an angle of up to about ten degrees from vertical relative to the ground, and the step 108 is about horizontal in the step operating position 116.

As shown in FIG. 2, hitch assembly 106 is coupled to support member 104 at pivot joint 128. Pivot joint 128 is formed by clevis pin 130 being inserted through through-holes 132 in support member 104 and through-hole 134 in hitch swivel plate 122. Hitch 120 is coupled to hitch swivel plate 122 in a fixed position relative to the hitch swivel plate 122 by means of bolts (not shown) or other suitable fasteners inserted through or fixed through through-holes 136 in hitch 120 and through-holes 138 in hitch swivel plate 122. Likewise, step 108 is coupled to or formed integrally with hitch swivel plate 122 in a fixed position relative to hitch swivel plate 122 on an opposite face 126 of hitch swivel plate 122 from the face 124 on which hitch 120 is coupled to hitch swivel plate 122. Support member 104 is provided with through-holes 140 for bolting or otherwise coupling support member 104 to base member 102 in a fixed position relative to base member 102.

In FIG. 3, the hitch and step assembly 100 is shown with the hitch assembly 106 locked in the hitch operating position 112 and the step 108 locked in the step storage position 114. In this position 114, step 108 is housed within support member 104, where it is protected from accumulating debris and interferes minimally if at all with any adjacent structures on the agricultural machine 10. The hitch assembly 106 is held in position by clevis pin 142 inserted through through-holes 144 in support member 104 and though-hole 146 in hitch swivel plate 122.

In FIG. 4, clevis pin 142 is removed from through-holes 144 and 146 to release hitch assembly 106 from the hitch operating position 112 and step 108 from the step storage position 114. Hitch assembly 106 is then rotated into hitch storage position 110, and step 108 is rotated into step operating position 116, as shown in FIG. 5. Hitch assembly 106 may then be locked in positions 110, 116 by inserting clevis pin 142 through through-holes 148 in support member 104 and through-hole 150 in hitch swivel plate 122, as shown in FIG. 6.

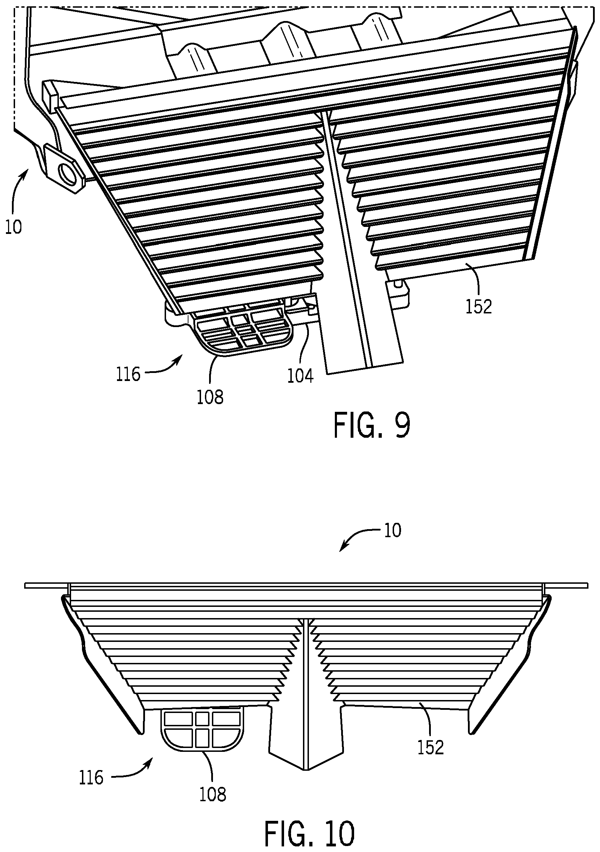

FIGS. 7 and 8 show a portion of an agricultural machine 10 including integrated hitch and step assembly 100, in which support member 104 is coupled in a fixed position relative to base member 102. In FIG. 7, hitch assembly 106 is shown locked in the hitch operating position 112, and step 108 is shown in the step storage position 114 inside support member 104. In FIGS. 8-10, hitch assembly 106 has been rotated into hitch storage position 110, and step 108 is in step operating position 116. As shown in FIG. 8, due to the non-vertical position of axis 118, hitch 120 has been elevated upward to a storage position 110 higher above the ground than in the hitch operating position 112, in which storage position 110 hitch 120 creates no interference with ground clearance. In addition, step 108 is now in a substantially horizontal position to enable service access to the sieves 152. Sieves 152 may be analogous to any of the above described sieves in FIG. 1, or a grain pan that is connected to one of those sieves. Further, as seen in FIGS. 9 and 10, hitch 120 has been rotated away from step 108, where it cannot interfere with access to the step 108 and proximate service points on machine 10.

While this invention has been described with respect to at least one embodiment, the present invention can be further modified within the scope of the invention defined by the appended claims.

## Claims

1. An integrated hitch and step assembly (100) for being coupled with a base member (102) of an agricultural machine (10), **characterized in that** the assembly (100) comprises:
a support member (104) configured for being coupled with the base member (102) in a fixed position relative to the base member (102);
a hitch assembly (106) configured for being coupled with the support member (104) and for moving relative to the support member (104) between a hitch storage position (110) and a hitch operating position (112); and
at least one step (108) coupled with the hitch assembly (106), the step (108) being in a step storage position (114) when the hitch assembly (106) is in the hitch operating position (112), and the step (108) being in a step operating position (116) when the hitch assembly (106) is in the hitch storage position (110),
wherein the hitch assembly (106) is coupled pivotally with the support member (104), wherein the hitch assembly (106) moves between the hitch storage position (110) and the hitch operating position (112) when the hitch assembly (106) is rotated relative to the support member (104), the hitch assembly (106) being configured for pivoting about an axis (118) between the hitch storage position (110) and the hitch operating position (112).

2. The hitch and step assembly (100) according to claim 1, **characterized in that** the hitch assembly (106) comprises a hitch (120) coupled with a hitch swivel plate (122) in a fixed position relative to the hitch swivel plate (122).

3. The hitch and step assembly (100) according to claim 1 or 2, **characterized in that** the step (108) is coupled with the hitch swivel plate (122) in a fixed position relative to the hitch swivel plate (122).

4. The hitch and step assembly (100) according to one of claims 1 to 3, **characterized in that** the hitch (120) is coupled with the hitch swivel plate (122) on a face (124) of the hitch swivel plate (122) that faces outward when the hitch assembly (106) is in the hitch operating position (112).

5. The hitch and step assembly (100) according to one of claims 1 to 4, **characterized in that** the step (108) is coupled with the hitch swivel plate (122) on a face (126) of the hitch swivel plate (122) that faces inward when the hitch assembly (106) is in the hitch operating position (112).

6. The hitch and step assembly (100) according to one of claims 1 to 5, **characterized in that** the axis (118) is angled such that the hitch (120) is raised vertically relative to the ground when the hitch assembly (106) is moved from the hitch operating position (112) to the hitch storage position (110) and such that the step (108) leveled for access in the step operating position (116).

7. The hitch and step assembly (100) according to one of claims 1 to 6, **characterized in that** the axis (118) is at an angle of about ten degrees from vertical relative to the ground.

8. The hitch and step assembly (100) according to one of claims 1 to 7, **characterized in that** the step (108) is horizontal in the step operating position (116).

9. An agricultural machine (10), comprising the base member (102) and the hitch and step assembly (100) according to any one of the preceding claims for being coupled to the base member (102).

10. The agricultural machine (10) according to claim 9, **characterized in that** the agricultural machine (10) is an agricultural combine harvester, a forage harvester, or a cotton harvester.

11. The agricultural machine (10) according to claim 9 or 10, **characterized in that** the base member (102) comprises the support member (104) for the hitch assembly (106).

## Patentansprüche

1. Integrierte Anhängerkupplungs- und Trittstufenanordnung (100) zur Kupplung mit einem Basiselement (102) einer landwirtschaftlichen Maschine (10), **dadurch gekennzeichnet, dass** die Anordnung (100) umfasst:
ein Stützelement (104), das dazu eingerichtet ist, in einer festen Position relativ zum Basiselement (102) mit dem Basiselement (102) gekoppelt zu werden;
eine Anhängerkupplungsanordnung (106), die dazu eingerichtet ist, mit dem Stützelement (104) gekoppelt zu werden und sich relativ zum Stützelement (104) zwischen einer Anhängerkupplungs-Lagerstellung (110) und einer Anhängerkupplungs-Betriebsstellung (112) zu bewegen; und
mindestens eine Trittstufe (108), die mit der Anhängerkupplungsanordnung (106) gekoppelt ist, wobei sich die Trittstufe (108) in einer Trittstufenlagerstellung (114) befindet, wenn sich die Anhängerkupplungsanordnung (106) in der Anhängerkupplungs-Betriebsstellung (112) befindet, und sich die Trittstufe (108) in einer Trittstufenbetriebsstellung (116) befindet, wenn sich die Anhängerkupplungsanordnung (106) in der Anhängerkupplungs-Lagerstellung (110) befindet,
wobei die Anhängerkupplungsanordnung (106) schwenkbar mit dem Stützelement (104) gekoppelt ist, wobei sich die Anhängerkupplungsanordnung (106) zwischen der Anhängerkupplungs-Lagerstellung (110) und der Anhängerkupplungs-Betriebsstellung (112) bewegt, wenn die Anhängerkupplungsanordnung (106) relativ zum Stützelement (104) gedreht wird, wobei die Anhängerkupplungsanordnung (106) dazu eingerichtet ist, um eine Achse (118) zwischen der Anhängerkupplungs-Lagerstellung (110) und der Anhängerkupplungs-Betriebsstellung (112) zu schwenken.

2. Anhängerkupplungs- und Trittstufenanordnung (100) nach Anspruch 1, **dadurch gekennzeichnet, dass** die Anhängerkupplungsanordnung (106) eine Anhängevorrichtung (120) umfasst, die mit einer Anhängevorrichtungsschwenkplatte (122) in einer festen Position relativ zur Anhängevorrichtungsschwenkplatte (122) gekoppelt ist.

3. Anhängerkupplungs- und Trittstufenanordnung (100) nach Anspruch 1 oder 2, **dadurch gekennzeichnet, dass** die Trittstufe (108) mit der Anhängevorrichtungsschwenkplatte (122) in einer festen Position relativ zur Anhängevorrichtungsschwenkplatte (122) gekoppelt ist.

4. Anhängerkupplungs- und Trittstufenanordnung (100) nach einem der Ansprüche 1 bis 3, **dadurch gekennzeichnet, dass** die Anhängevorrichtung (120) mit der Anhängevorrichtungsschwenkplatte (122) auf einer Fläche (124) der Anhängevorrichtungsschwenkplatte (122) gekoppelt ist, die nach außen gerichtet ist, wenn sich die Anhängerkupplungsanordnung (106) in der Anhängerkupplungs-Betriebsstellung (112) befindet.

5. Anhängerkupplungs- und Trittstufenanordnung (100) nach einem der Ansprüche 1 bis 4, **dadurch gekennzeichnet, dass** die Trittstufe (108) mit der Anhängevorrichtungsschwenkplatte (122) auf einer Fläche (126) der Anhängevorrichtungsschwenkplatte (122) gekoppelt ist, die nach innen gerichtet ist, wenn sich die Anhängerkupplungsanordnung (106) in der Anhängerkupplungs-Betriebsstellung (112) befindet.

6. Anhängerkupplungs- und Trittstufenanordnung (100) nach einem der Ansprüche 1 bis 5, **dadurch gekennzeichnet, dass** die Achse (118) derart geneigt ist, dass die Anhängevorrichtung (120) relativ zum Boden vertikal angehoben wird, wenn die Anhängerkupplungsanordnung (106) von der Anhängerkupplungs-Betriebsstellung (112) in die Anhängerkupplungs-Lagerstellung (110) bewegt wird, und dass die Trittstufe (108) in der Trittstufenbetriebsstellung (116) zum Betreten waagerecht ausgerichtet ist.

7. Anhängerkupplungs- und Trittstufenanordnung (100) nach einem der Ansprüche 1 bis 6, **dadurch gekennzeichnet, dass** die Achse (118) in einem Winkel von etwa zehn Grad zur Vertikalen relativ zum Boden angeordnet ist.

8. Anhängerkupplungs- und Trittstufenanordnung (100) nach einem der Ansprüche 1 bis 7, **dadurch gekennzeichnet, dass** die Trittstufe (108) in der Trittstufenbetriebsstellung (116) horizontal ist.

9. Landwirtschaftliche Maschine (10) umfassend das Basiselement (102) und die Anhängerkupplungs- und Trittstufenanordnung (100) nach einem der vorhergehenden Ansprüche zur Verbindung mit dem Basiselement (102).

10. Landwirtschaftliche Maschine (10) nach Anspruch 9, **dadurch gekennzeichnet, dass** die landwirtschaftliche Maschine (10) ein Mähdrescher, ein Feldhäcksler oder eine Baumwoll-Erntemaschine ist.

11. Landwirtschaftliche Maschine (10) nach Anspruch 9 oder 10, **dadurch gekennzeichnet, dass** das Basiselement (102) das Stützelement (104) für die Anhängerkupplungsanordnung (106) umfasst.

## Revendications

1. Un ensemble marche et attelage intégré (100) destiné à être couplé à un élément de base (102) d'une machine agricole (10), **caractérisé en ce que** l'ensemble (100) comprend :
un élément de soutien (104) configuré pour être couplé à l'élément de base (102) dans une position fixe par rapport à l'élément de base (102) ;
un ensemble attelage (106) configuré pour être couplé à l'élément de soutien (104) et pour se déplacer par rapport à l'élément de soutien (104) entre une position de stockage d'attelage (110) et une position de fonctionnement d'attelage (112) ; et
au moins une marche (108) couplée à l'ensemble attelage (106), la marche (108) étant dans une position de stockage de marche (114) lorsque l'ensemble attelage (106) est dans la position de fonctionnement d'attelage (112), et la marche (108) étant dans une position de fonctionnement de marche (116) lorsque l'ensemble attelage (106) est dans la position de stockage d'attelage (110),
dans lequel l'ensemble attelage (106) est couplé de manière pivotante à l'élément de soutien (104), dans lequel l'ensemble attelage (106) se déplace entre la position de stockage d'attelage (110) et la position de fonctionnement d'attelage (112) lorsque l'ensemble attelage (106) est tourné par rapport à l'élément de soutien (104), l'ensemble attelage (106) étant configuré pour pivoter autour d'un axe (118) entre la position de stockage d'attelage (110) et la position de fonctionnement d'attelage (112).

2. L'ensemble attelage et marche (100) selon la revendication 1,
**caractérisé en ce que** l'ensemble attelage (106) comprend un attelage (120) couplé à une plaque pivotante d'attelage (122) dans une position fixe par rapport à la plaque pivotante d'attelage (122).

3. L'ensemble attelage et marche (100) selon la revendication 1 ou la revendication 2, **caractérisé en ce que** la marche (108) est couplée à la plaque pivotante d'attelage (122) dans une position fixe par rapport à la plaque pivotante d'attelage (122).

4. L'ensemble attelage et marche (100) selon l'une quelconque des revendications 1 à 3, **caractérisé en ce que** l'attelage (120) est couplé à la plaque pivotante (122) sur une face (124) de la plaque pivotante (122) qui est orientée vers l'extérieur lorsque l'ensemble attelage (106) est dans la position de fonctionnement d'attelage (112).

5. L'ensemble attelage et marche (100) selon l'une quelconque des revendications 1 à 4, **caractérisé en ce que** la marche (108) est couplée à la plaque pivotante (122) sur une face (126) de la plaque pivotante (122) qui est orientée vers l'intérieur lorsque l'ensemble attelage (106) est en position de fonctionnement d'attelage (112).57856-C-EP 10

6. L'ensemble attelage et marche (100) selon l'une quelconque des revendications 1 à 5, **caractérisé en ce que** l'axe (118) est incliné de manière à ce que l'attelage (120) soit soulevé verticalement par rapport au sol lorsque l'ensemble attelage (106) est déplacé de la position de fonctionnement d'attelage (112) à la position de stockage d'attelage (110) et de manière à ce que la marche (108) soit mise à niveau pour l'accès dans la position de fonctionnement de marche (116).

7. L'ensemble attelage et marche (100) selon l'une quelconque des revendications 1 à 6, **caractérisé en ce que** l'axe (118) est incliné à partir de la verticale à un angle d'environ dix degrés par rapport au sol.

8. L'ensemble attelage et marche (100) selon l'une quelconque des revendications 1 à 7, **caractérisé en ce que** la marche (108) est à l'horizontale dans la position de fonctionnement de marche (116).

9. Une machine agricole (10), comprenant l'élément de base (102) et l'ensemble attelage et marche (100) selon l'une quelconque des revendications précédentes pour être couplée à l'élément de base (102).

10. La machine agricole (10) selon la revendication 9, **caractérisée en ce que** la machine agricole (10) est une moissonneuse-batteuse agricole, une récolteuse-hacheuse ou une récolteuse de coton.

11. La machine agricole (10) selon la revendication 9 ou la revendication 10, **caractérisée en ce que** l'élément de base (102) comprend l'élément de soutien (104) pour l'ensemble attelage (106).
